# EUROPEAN PATENT SPECIFICATION

(11) **EP 0 645 840 B1**
(45) Date of publication and mention of the grant of the patent: **24.02.1999**
(21) Application number: 94202738.4
(22) Date of filing: 23.09.1994
(51) Int. Cl.: H01Q 7/04, G08B 13/24

(54) **Antenna configuration of an electromagnetic detection system and an electromagnetic detection system comprising such antenna configuration**
Antennenkonfiguration eines elektromagnetischen Detektierungssystems und ein derartiges System mit einer solchen Antennenkonfiguration
Configuration d'antenne d'un système de détection électromagnétique et un tel système comportant une telle configuration

(30) Priority: 24.09.1993 NL 9301650
(43) Date of publication of application: 29.03.1995
(73) Proprietor: N.V. Nederlandsche Apparatenfabriek NEDAP, NL-7141 DE Groenlo (NL)
(72) Inventor: Rebers, Paulus, NL-7521 BM Enschede (NL)
(74) Representative: Smulders, Theodorus A.H.J., Ir.

(56) References cited:
- DE-A- 4 027 710
- US-A- 4 633 250

## Description

This invention relates to an antenna configuration of an electromagnetic detection system for detecting and/or identifying detection labels, comprising a first and a second antenna array, which in operation are connected with a transmitter and/or receiver of the detection system and are located at least essentially and substantially in one plane, the first antenna array comprising a plurality of current loops.

This invention also relates to an electromagnetic detection system comprising a transmitter and receiver unit and an antenna configuration coupled thereto.

The detection systems referred to typically function as shoplifting detection systems, which operate, for instance, as follows: the system generates a magnetic alternating field by means of the antenna configuration. The frequency of that alternating field can for instance be varied over a predetermined frequency interval. A passive detection label, which comprises a resonance circuit which, for instance, consists of a coil and a capacitor, will generate a secondary magnetic alternating field at those moments when an instantaneous frequency of the field is equal to the resonance frequency of the label, as soon as this label is introduced into the field of the antenna configuration. This secondary magnetic alternating field can subsequently be received by a receiving antenna which is coupled to a receiver of the detection system. In a detection system of the absorption type, this secondary field is received by the same antenna as the antenna with which the primary field has been generated. The antenna arrays can be used not only as a transmitting antenna array, but also as a combined transmitting and receiving array. In addition, the antenna arrays can be used as a receiving antenna array.

Electromagnetic detection systems comprising antennas which generate an interrogation field in a detection zone and which detect a response of a label in the same detection zone are increasingly becoming subject to electromagnetic compatibility requirements, EMC requirements for short, which impose limitations, on the one hand on the electromagnetic field which the (transmitting) antenna produces at a substantial distance outside the detection zone and, on the other, on the sensitivity of the (receiving) antenna to interfering fields of external sources.

A detection array of the type described in the opening paragraph hereof is disclosed, for instance, in Dutch patent application 9201270. To meet the above-mentioned problems, in accordance with the Dutch patent application a first antenna array is used which comprises an 8-shaped antenna. The remote coupling of fields is then much smaller because the fields of the two halves of the 8-shaped antenna compensate each other at a distance. An 8-shaped antenna which is used as a transmitting antenna will therefore generate a negligibly weak electromagnetic field at a substantial distance.

A disadvantage of the 8-shaped antenna is that in the middle the field lines run parallel to the plane of the antenna, so that a detection label oriented parallel to the same plane cannot be detected then. In anti-shoplifting systems, this phenomenon is known as the trouser pocket effect.

In accordance with Dutch patent application 9201270 this problem has been overcome in that the second antenna array comprises an O-shaped antenna, the first and second antenna arrays being controlled with transmitted signals which are 90° out of phase.

A disadvantage of this antenna configuration is that the O-shaped antenna still generates a relatively strong electromagnetic field at a distance. Such a field may have an interfering effect on an antenna which, for instance, is connected with the receiver of the detection system.

Such interference could perhaps be prevented by reducing the strength of the transmitted signal. However, the disadvantage of this solution is that the detection zone is reduced and also that the probability of a detection label being detected decreases. If the antenna configuration is also used as a receiving antenna, i.e. when the detection system is of the absorption type, a receiver which is connected with the O-shaped antenna will also be sensitive to fields which have been transmitted at a substantial distance, so that the sensitivity of the receiver is limited.

A further disadvantage of a combination of a first antenna array designed as an 8-shaped antenna and a second antenna array designed as an O-shaped antenna is that a rotary field is produced only in the middle of the antenna configuration, where the field lines are perpendicular. In the middle of the two halves of the 8-shaped antenna, the field lines are not perpendicular and the rotary field is not optimal, i.e. the field is not the same in all orientations.

The object of the present invention is to provide a solution to the above-mentioned problems and is characterized in that the second antenna array comprises a plurality of current loops.

An advantage of such an antenna configuration is that electromagnetic fields which are radiated by the antenna configuration will compensate each other at a substantial distance, i.e. will nullify each other.

When the antenna configuration is used as a receiving antenna, i.e. when the first and/or second antenna array is used as a receiving antenna, an advantage is present in that the receiving antenna is insensitive to electromagnetic signals radiated at a substantial distance. As a result, the receiver can be made of a more sensitive design.

Another advantage is that now the first and second antenna arrays substantially cannot be inductively coupled with each other. In a large part of the detection zone the first and second antenna arrays are therefore independent, without being inductively coupled. This provides the possibility of generating a rotary field by controlling the first and second antenna arrays with transmitted signals which are 90° out of phase relative to each other. Then a field is present in two directions at all points in the detection zone, and the EMC requirements referred to above can be satisfied in that the radiated electromagnetic fields compensate each other at a distance, i.e. are reduced to zero. Because at several points the field lines of the first and second antenna arrays are at right angles, accordingly an optimum rotary field is produced, likewise at several points. To that end, the second antenna array preferably comprises more current loops than does the first antenna array. In particular, the second antenna array comprises one more current loop than does the first antenna array.

The antenna configuration according to the invention can also be utilized with advantage in an electromagnetic detection system of the transmission type. With this type, either of the antenna arrays is connected with the transmitter and the other antenna array is connected with the receiver. Because the transmitting and receiving antennas are not inductively coupled, it is thus possible, in principle, to realize the same sensitivity as with a transmission system where the transmitting and receiving antennas are spatially separated from each other.

An electromagnetic detection system according to the invention is characterized in that the second and fourth electrical conductors consist at least partly of a hollow electrically conductive tube, the first and third electrical conductors being inductively coupled with, respectively, the second and fourth electrical conductors in that the first and third electrical conductors extend partly within the tube.

An electromagnetic detection system according to the invention is also characterized in that the first and second antenna arrays are controlled, respectively, with first and second transmitted signals which have a relative phase difference of 90°, so that an electromagnetic rotary field is generated at several points in a detection zone.

The detection system disclosed in European patent application 93202073.8 can also be provided with an antenna configuration according to the invention. In the detection system disclosed in this European patent application, in accordance with the invention the O-shaped antenna should then be replaced with a second antenna system with a plurality of current loops. Such a detection system is also considered to fall within the scope of the invention.

U.S. Patent 4,633,250 discloses an antenna system which comprises two antenna arrays, each provided with a plurality of current loops located in one plane. However, the current loops of the first antenna system enclose a surface which does not overlap the surface enclosed by the current loops of the second antenna system. The antenna configuration according to the U.S. patent is adapted to be connected with a transmitter, the first antenna array and the second antenna array alternately transmitting a transmitted signal for obtaining an alternating interrogation field. However, the antenna configuration does not have the property of being suitable for controlling both antenna systems simultaneously for obtaining a rotary field. Further, the antenna configuration is not suitable to connect either of the antenna arrays with a transmitter, while the other antenna array is connected with a receiver. Although the antenna configuration further comprises a third antenna array, which functions as a receiving antenna, this antenna array only comprises one current loop.

German Offenlegungsschrift 4,027,710 discloses an antenna configuration which is also made up of two antenna arrays each provided with a plurality of current loops. However, the first and second antenna arrays are not located, at any rate substantially not located, in the same plane. The current loops of the two antenna arrays accordingly do not enclose any surfaces which overlap each other. Accordingly, the first antenna array is intended exclusively to be connected with a transmitter, whereas the second antenna array is intended to be connected with a receiver.

The invention will now be further explained with reference to the drawing. In the drawing:
Fig. 1 shows a first embodiment of a first antenna array of an antenna configuration according to the invention;
Fig. 2 shows a first embodiment of a second antenna array of an antenna configuration according to the invention;
Fig. 3 shows a first embodiment of an antenna configuration according to the invention;
Fig. 4 shows an embodiment of an electromagnetic detection system according to the invention;
Fig. 5 shows an alternative embodiment of an electromagnetic detection system according to the invention;
Fig. 6 shows a second embodiment of a second antenna array for an antenna configuration according to the invention;
Fig. 7 shows a second embodiment of a first antenna array for an antenna configuration according to the invention;
Fig. 8 shows a second embodiment of an antenna configuration according to the invention;
Fig. 9 shows a third embodiment of a second antenna array for an antenna configuration according to the invention;
Fig. 10 shows a third embodiment of a first antenna array for an antenna configuration according to the invention;
Fig. 11 shows a third embodiment of an antenna configuration according to the invention;
Fig. 12 shows a fourth embodiment of a second antenna array for an antenna configuration according to the invention; and
Fig. 13 shows a fifth embodiment of a second antenna array for an antenna configuration according to the invention.

The invention relates to an array of current loops in one plane, which generate an electromagnetic field in their direct environment but do not radiate a field at a substantial distance. The term "substantial distance" should be interpreted broadly here, referring, for instance, to a distance which is much greater than the greatest cross section of the antenna configuration formed by the current loops. Such antenna configurations are typically used in shoplifting detection systems, where an interrogation field is generated in a detection zone by means of the antenna configuration.

The detection zone may then have dimensions which are known per se, for instance of 50 cm, 1 m, 2 m, etc., all this depending on the dimensions of the antenna configuration. The field generated by the antenna configuration in the detection zone could then be designated as the near field. The near field and the far field, however, are notions which are known per se to the skilled worker and will therefore not be further defined here. Accordingly, the invention is not in any manner limited to the above examples of possible distances for the far field and the near field.

The current loops referred to can be used as a transmitting antenna array, but also as a combined transmitting and receiving array. In addition, the current loops can be used as a receiving antenna array.

Electromagnetic detection systems comprising transmitting antennas which generate an interrogation field in a detection zone and receiving antennas which detect a response of a label in the same detection zone, are becoming more and more subject to electromagnetic compatibility requirements or EMC requirements. These EMC requirements impose a limitation, on the one hand on the electromagnetic field which the transmitting antenna produces at a substantial distance outside the detection zone (the far field) and, on the other, on the sensitivity of the receiving antenna to interfering fields of external sources. For that reason, typically an 8-shaped antenna is used. The coupling with remote fields is then much smaller because the fields of the two halves compensate each other at a distance, i.e. they are reduced to zero. An 8-shaped antenna which is used as a transmitting antenna will therefore generate a negligibly weak electromagnetic field at a substantial distance.

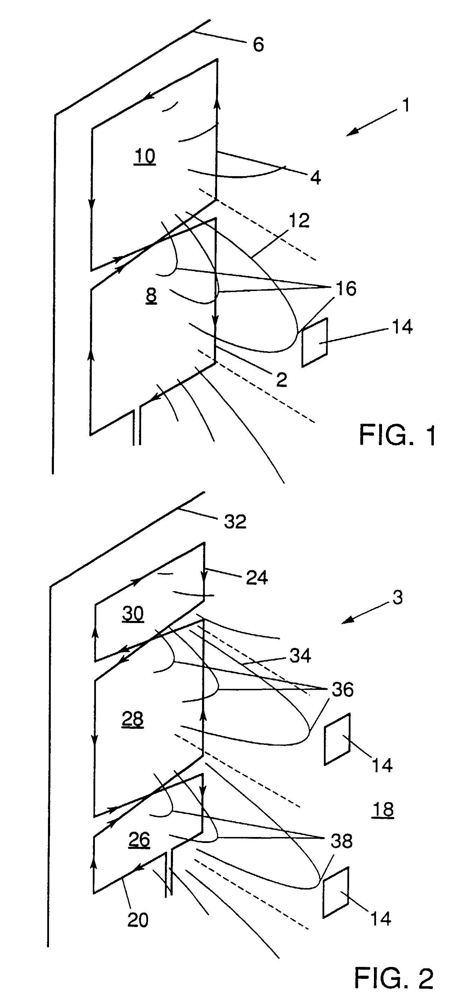

Also, an 8-shaped antenna which is used as a receiving antenna is insensitive to electromagnetic fields which have been generated by a transmitter located at a substantial distance from an antenna. One embodiment of an antenna array 1 comprising an 8-shaped antenna is shown in Fig. 1. The antenna array 1 according to Fig. 1 shows an 8-shaped antenna comprising a first current loop 2 and a second current loop 4. In this example, both current loops are included in a flat plane 6, which is diagrammatically represented in the drawing. The first current loop 2 encloses a first surface 8, while the second current loop 4 encloses a second surface 10. The current loops of the first antenna array 1 have been wound such that a current flowing through the first current loop has a rotative direction opposite to the rotative direction of a current flowing through the second current loop. If the antenna array 1 functions as a transmitting antenna array, an electromagnetic field 12 will be radiated, which is represented by dots in the drawing.

A disadvantage of the antenna array as shown in Fig. 1 is that in the middle the field lines run parallel to the antenna plane 6 so that a detection label 14 which is oriented parallel to the plane 6, is not detected. The parallel field lines referred to are designated in the drawing by reference numerals 16. In anti-shoplifting systems, the above-mentioned problem is known under the name of trouser pocket effect.

In Dutch patent application 9201270 and in European patent application 186483, this problem has been solved with magnetic rotary fields in which an O-shaped and an 8-shaped antenna are controlled with 90° phase difference. In that case, the antenna configuration consists of two antenna arrays located at least substantially in the same plane. A disadvantage of this is that the O-shaped antenna still yields too much magnetic coupling at a distance, which limits the sensitivity of the receiver or the maximum field strength of the transmitter. In fact, if the O-shaped antenna is connected with a transmitter, it will still generate an electromagnetic field at a substantial distance. On the other hand, a receiver connected with the O-shaped antenna will also be sensitive to fields radiated at a substantial distance, so that the sensitivity of the receiver is limited. Also, a receiver connected with another antenna will typically be subject to interference by the electromagnetic field still generated by the O-shaped antenna at a substantial distance. In the last-mentioned patent application, this disadvantage has been partly compensated by a screen on one side of the antenna.

A second disadvantage of a combination of a first antenna array comprising an 8-shaped antenna and a second antenna array comprising an O-shaped antenna is that a rotary field will be generated exclusively in the middle, where the field lines are perpendicular. In the middle of the two halves of the 8-shaped antenna, the field lines are not perpendicular and the rotary field is not optimal, i.e. the field is not the same in all orientations.

U.S. Patents 4,251,808 and 8,024,264 disclose, besides the known 8-shaped antenna, a different antenna array (18), which is shown in Fig. 2. The antenna array 18 consists of a rectangle, with cross connections at a quarter and three-quarters of the height of the rectangle. The antenna array 18 thus comprises a third current loop 20, a fourth current loop 22 and a fifth current loop 24. The third current loop 20 encloses a third surface 26, the fourth current loop 22 encloses a fourth surface 28 and the fifth current loop 24 encloses a fifth surface 30. The second antenna array 18 is located in a plane 32, diagrammatically represented in the drawing. The current loops 20, 22 and 24 have been wound such that the rotative direction of a current through the fourth current loop 22 has a direction opposite to the rotative direction of a current through the third current loop 20 and the fifth current loop 24. All this implies that an electromagnetic field 34 is generated which comprises two series of positions 36, 38 whose field direction is parallel to the plane 32. A detection label 14 located at one of the series of positions 36 or 38 will again not be detected then. On the other hand, the field generated by the fourth current loop 22 will be compensated at a substantial distance by the electromagnetic field generated by the third current loop 20 and the fifth current loop 24. The electromagnetic fields generated by the second antenna array 18 will therefore compensate each other or reduce each other to zero at a substantial distance. This renders the far field negligibly small.

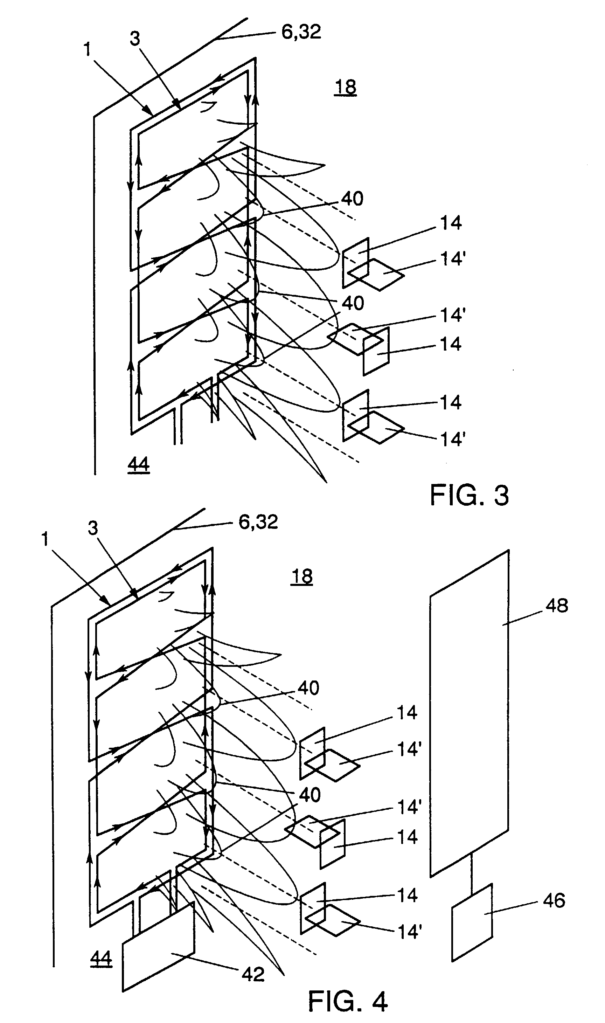

Fig. 3 shows a possible embodiment of an antenna configuration according to the invention which solves the problem of the trouser pocket effect. The antenna configuration according to Fig. 3 is made up of a first antenna array 1, corresponding with the antenna array according to Fig. 1, and a second antenna array 18, corresponding with the antenna array according to Fig. 2. The plane 6 coincides with the plane 32. It also possible that the plane 32 is parallel to the plane 6 and is located at a small distance from the plane 6. A small distance can for instance be interpreted as a distance much smaller than a greatest section of one of the current loops. Accordingly, if it is disclosed that the first and second antenna arrays 1 and 18 are located at least substantially in the same plane, this is understood to encompass the situation where the two antenna arrays are located in two closely spaced planes. In that case, the two antenna arrays are located substantially in a plane located between the two planes referred to. It is stressed that this variant also falls within the scope of the invention. Also in the case where a small part of a current loop is located outside the plane in question, i.e. the current loop is located at least substantially in that plane, a variant is obtained which is understood to fall within the scope of the invention.

The antenna configuration according to Fig. 3 has the property that at a position in the space where the second antenna configuration generates a field which is parallel to the plane 6, 32, the first antenna configuration generates a field which is perpendicular to the plane 6, 32. Accordingly, the two fields referred to are at right angles. In Fig. 3 such positions have been designated by reference character 40.

Accordingly, in a large part of the detection zone the first and second antenna arrays are independent, without being inductively coupled. This provides the possibility of generating a rotary field by controlling the two antenna arrays which have a relative phase difference of 90° with a transmitted signal. Then a field in two directions is present at any point in the detection zone, and the above-mentioned EMC requirements can be satisfied in that the fields generated by the current loops compensate each other at a substantial distance, i.e. reduce each other to zero. As is clear from Fig. 3, a detection label 14 which is parallel to the plane 6, 32 will be properly detectable. A detection label 14', which is perpendicular to the plane 6, 32, will be properly detectable as well. This means that detection labels with a random orientation can be detected at all times. Accordingly, the antenna configuration of Fig. 3 can be utilized advantageously in an electromagnetic detection system such as is shown in Fig. 4.

The detection system according to Fig. 4 comprises a transmitter 42, which is coupled to an antenna configuration 44, such as it is shown in Fig. 3. The rotary field described with reference to Fig. 3 is generated by means of the transmitter 42. Further, the detection system comprises a receiver 46 and a receiving antenna 48, coupled to the receiver, which may, for instance, be designed as an O-shaped antenna. A detection label 14, 14', located in the detection field generated by the antenna configuration 44, will radiate a response signal which will be received by the receiver 46 for further processing. According to an alternative embodiment of the electromagnetic detection system, the receiver 46 and the receiving antenna 48 are omitted. The system will then function according to the absorption principle, which is known per se. The transmitter 42 will radiate the rotary field such as it has been described hereinbefore. According to this variant, the transmitter further comprises detection means for detecting an energy variation in the transmitted signal produced when a detection label 14, 14' responds when it is located in the detection zone.

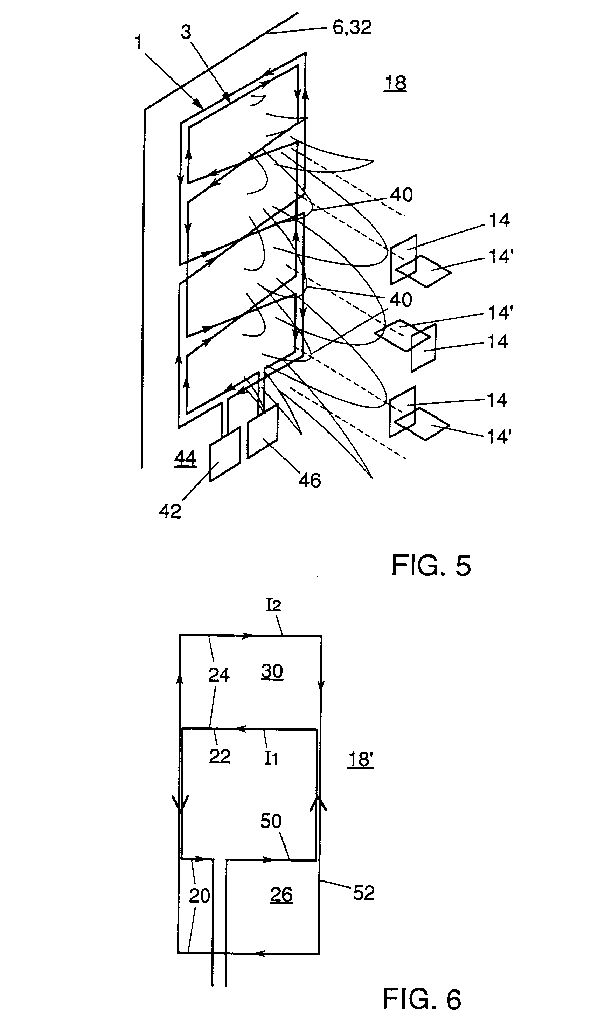

The antenna configuration according to Fig. 3 can also be used in a transmission system in one plane, one of the two antenna arrays being connected with the transmitter 42 and the other of the two antenna arrays being connected with the receiver 46. All this is shown diagrammatically in Fig. 5. Because the first detection array 1 is not inductively coupled to the second detection array 18, in principle the same sensitivity can be realized with it as in a transmission system where the transmitting and receiving antennas are spatially separated.

In Fig. 5 the transmitter 42 is connected with the first antenna array 1, while the receiver 46 is connected with the second antenna array 18. However, it is also possible that the transmitter is connected with the second antenna array 18, while the receiver is connected with the first antenna array 1. However, the electromagnetic detection system according to Fig. 5 does not have the possibility of generating a rotary field. On the other hand, the electromagnetic detection system according to Fig. 5 has the advantage that the magnitude of the generated electromagnetic field outside the detection zone is very small. The reason is that the fields generated by the current loops of the first antenna array will compensate each other at a substantial distance, i.e. reduce each other to zero. On the other hand, the second antenna array 18, which functions as receiving antenna, has an advantage in that it is insensitive to signals transmitted at a substantial distance, i.e. signals radiated by energy sources located outside the detection zone. Accordingly, the entire antenna configuration has a minimal coupling with the environment outside the detection zone.

Fig. 6 shows an alternative embodiment of the second antenna array 18 of Fig. 3. The second antenna array according to Fig. 6 is made up of a first O-shaped electrical conductor 50, which is part of the fourth current loop 22 and encloses the surface 28 enclosed by the fourth current loop 22. In use the free ends of the electrical conductor 50 are connected with the transmitter and/oR receiver. The second antenna array further comprises a second electrically closed O-shaped electrical conductor 52, which encloses the sum of the surfaces 26, 28 and 30 enclosed by the third 20, fourth 22 and fifth 24 current loops. The two electrical conductors 50 and 52 are inductively coupled with each other. This means that the electrical conductors 50 and 52 in combination form the current loops 20, 22 and 24. The notion "current loop" should therefore not be interpreted in constructive terms but in functional terms. The properties of the alternative embodiment of the second antenna array 18' as shown in Fig. 6 are therefore entirely comparable with the antenna array 18 such as it is shown in Fig. 3. In the shortcircuited O-shaped electrical conductor 52, through inductive coupling with the O-shaped electrical conductor 50, a current I2 will flow in a direction opposite to the current I1, flowing through the O-shaped conductor 50. The ratio between the magnitude of the currents I1 and I2 is proportional to the ratio between the magnitude of the sum of the surfaces 26, 28 and 30 on the one hand and the magnitude of the surface 28 on the other. The total current distribution of the second antenna array 18' thus corresponds with the current distribution of the second antenna array 18. Accordingly, the antenna array 18 according to Fig. 3 can be replaced with the second antenna array 18' according to Fig. 6, yielding a new embodiment of an antenna configuration according to the invention.

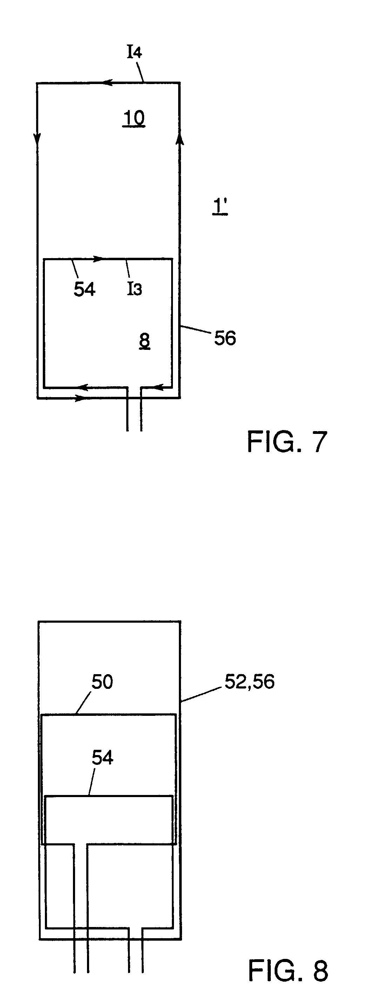

In Dutch patent application 91000397 a comparable effect is described for an 8-shaped antenna. All this will be further described with reference to Fig. 7.

Fig. 7 shows an alternative embodiment of the first antenna array 1 according to Fig. 3. Accordingly, the first antenna array 1 according to Fig. 3 can be replaced with the first antenna array 1' according to Fig. 7. Again, this yields a new embodiment of an antenna configuration according to the invention. The alternative embodiment of the first antenna array 1' is made up of a third O-shaped electrical conductor 54, which encloses the surface 8 enclosed by the first current loop and whose free ends are connected in use with the transmitter 42 or with the receiver 46. Further, the first antenna array 1' comprises a fourth electrically closed O-shaped conductor 56, which encloses the sum of the surfaces 8, 10 enclosed by the first and second current loops. The conductors 54 and 56 are inductively coupled with each other. This entails that the electrical conductors 54 and 56 in combination form current loops 2 and 4. Accordingly, it holds for the first antenna array 1 and 1', too, that the notion "current loop" can be interpreted in functional terms because a current loop can be formed by different conductors. If a current I3 flows through the conductor 54, a current I4 will start flowing in the O-shaped closed conductor 56 as a result of the inductive coupling. The rotative direction of the current I3 will again be opposite to the rotative direction of the current I4. The ratio of the surface 8 to the sum of the surfaces 8 and 10 will be proportional to the ratio between the magnitude of the current I4 and the magnitude of the current I3.

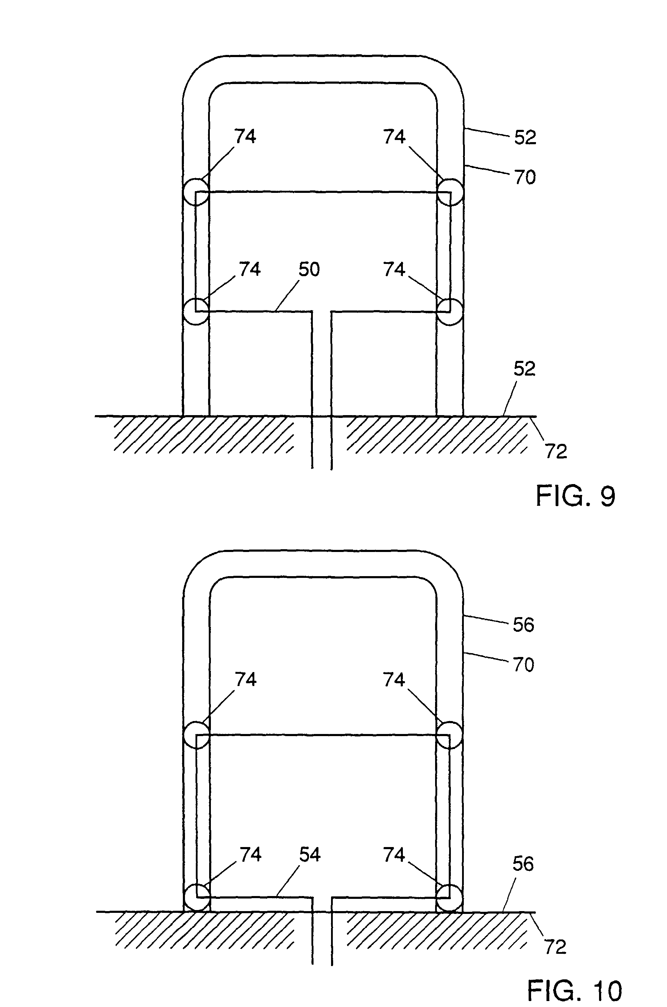

If the second antenna array of Fig. 6 is combined with the first antenna array of Fig. 7 to obtain an antenna configuration according to the invention, the second and fourth electrically closed O-shaped conductors may be one and the same conductor, such as it is diagrammatically shown in Fig. 8. It holds for the embodiments of the antenna arrays according to Figs. 7, 8 and 9 that it is relevant that an inductive coupling arises between the closed conductors 52 and 56 on the one hand and the non-closed conductors 50 and 54 on the other. This can, for instance, be realized by designing the closed conductors 52 and 56 at least partly as a hollow conductive tube. For Figs. 6, 7 and 8 this has been shown in Figs. 9, 10 and 11, respectively.

In Fig. 9 the closed electrical conductor 52 is made up of a U-shaped electrically conductive tube 70 and a conductive base 72, the free ends of the U-shaped tube 70 being connected to the base 72. The conductive tube 70 has been provided with a plurality of apertures 74 through which the first electrical conductor 50 is passed from the inside to the outside of the tube. There where the electrical conductor 50 is located within the tube 70, a complete inductive coupling between the conductor 50 and the tube 70 is effected. The electrical conductor 50 is located outside the tube only where cross connections are formed. It is important that there where the electrical conductors 50 and 52 run parallel side by side, the electrical conductor 52 is formed by the tube 70 in which the electrical conductor 50 is located.

In Fig. 10 the electrical conductor 56 of Fig. 7 has been replaced with a combination of the hollow tube 70 and the base 72. It holds here, too, that the third O-shaped electrical conductor 54 extends partly within the tube 70 in order to obtain a good inductive coupling between the third electrical conductor 54 and the fourth electrical conductor 56, 70, 72. The operation corresponds entirely with that described with reference to Fig. 9 and will not be explained in detail here.

It will be clear that the first and second antenna arrays of Fig. 3 can be replaced with the first and second antenna arrays according to Figs. 10 and 9.

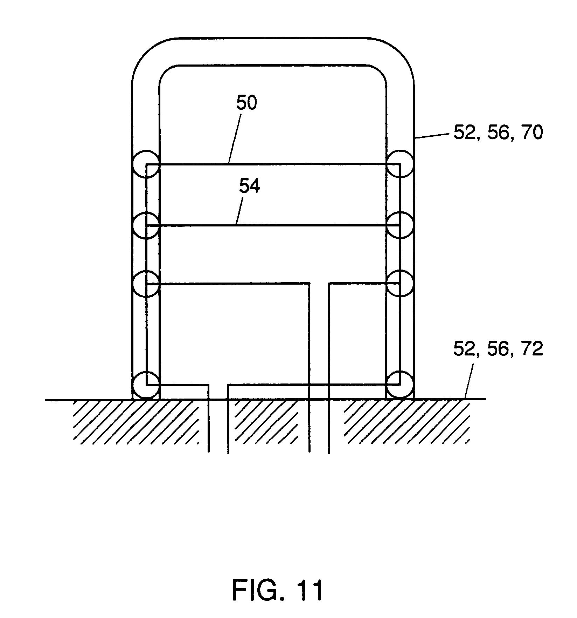

Fig. 11 shows an alternative embodiment of an antenna configuration according to the invention, in which the first and second antenna arrays according to Fig. 3 have both been replaced with the antenna arrays according to Figs. 9 and 10, and in which moreover the second and fourth O-shaped closed electrical conductor 52, 56 is designed as one electrically conductive tube and an electrically conductive base, to which this tube is attached. Thus, the antenna configuration according to Fig. 11 is functionally equivalent to the antenna configuration according to Fig. 8. It holds here, too, that the cross connections of the first conductor 50 and the third conductor 54 extend outside the tube, while the parts of the conductors 50 and 54 running close to and parallel to the electrical conductors 52 and 56 extend within the tube 70.

It is stressed that the invention is not in any way limited to the various embodiments of the antenna configurations described hereinabove. Thus, for instance, the magnitude of the surface 8 need not be equal to the magnitude of the surface 10. Also, it is not essential that the sum of the magnitudes of the surfaces 26 and 30 is equal to the magnitude of the surface 28. In particular, the surface 26 enclosed by the third current loop 20 will at least substantially entirely coincide with a part of the surface 8 enclosed by the first current loop 2 and the surface enclosed by the fifth current loop will coincide at least substantially entirely with a part of the surface enclosed by the second current loop. Further, the surface enclosed by the fourth current loop overlaps at least a part of the surface enclosed by the first current loop and at least a part of the surface enclosed by the second current loop. Preferably, the dividing line 11 located in the plane 6 divides the fourth surface 28 in two at least substantially equally large parts. Because the second antenna array comprises a plurality of current loops, the coupling with the environment at a substantial distance is slight, as has already been explained hereinabove. If the second antenna array moreover comprises more current loops than the first antenna array, the two antenna systems can be made of independent design, without being inductively coupled. A special case is shown in Fig. 3, where the first antenna array comprises two current loops and the second antenna array comprises three current loops. It is also possible, however, to provide the first antenna array with three current loops and the second antenna array with four or more current loops. In particular, however, the second antenna array comprises one more current loop than does the first antenna array. In any case, both antenna arrays each comprise at least two current loops.

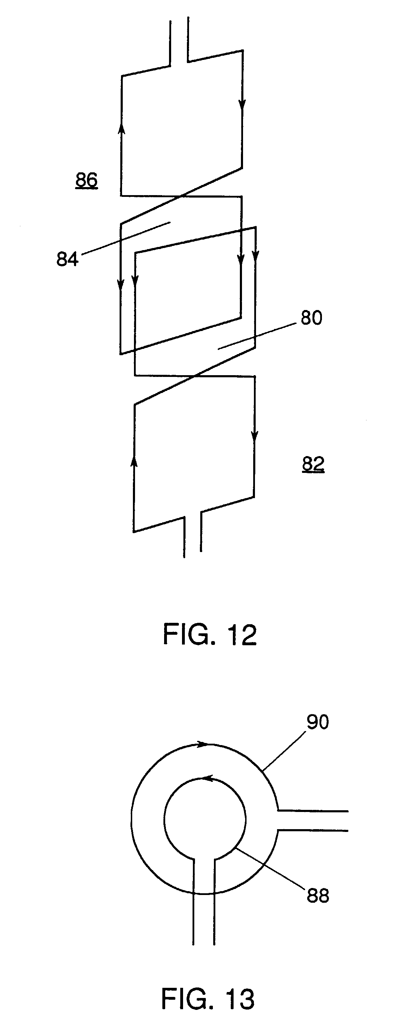

The second antenna array 18 of Fig. 3 may further be designed in a number of different ways, which variants are all understood to fall within the scope of the invention. The current distribution of the second antenna array according to Fig. 3 can be regarded as that of a combination of two identical partly overlapping 8-shaped antennas. A11 this can be designed in such a manner that the magnetic fields of two overlapping halves of the 8-shaped antennas amplify each other so as to form the field that would be generated by an O-shaped antenna in the middle thereof. The fields which are generated by the non-overlapping parts of the two 8-shaped antennas serve to compensate the field generated by the overlapping parts. Accordingly, at a distance these fields will compensate each other, i.e. reduce each other to zero. All this is shown diagrammatically in Fig. 12. A first part 80 of a first 8-shaped antenna 82 overlaps a first part 84 of a second 8-shaped antenna 86. In the drawing, the direction of flow is indicated by arrows. Thus, the electromagnetic fields generated by the overlapping parts of the 8-shaped antennas amplify each other.

The antenna array according to Fig. 12 can also be regarded as a combination of two O-shaped conductors 88 and 90, one conductor being twice as large as the other, see Fig. 13. However, the current through the conductor 88 is twice as large as the current through the conductor 90 and moreover oppositely directed, so that the electromagnetic fields generated by the two conductors again compensate each other at a distance.

## Claims

1. An antenna configuration of an electromagnetic detection system for detecting and/or identifying detection labels, comprising a first and a second antenna array, which in operation are connected with a transmitter and/or receiver of the detection system and are located at least essentially and substantially in one plane, the first antenna array comprising a plurality of current loops together enclosing a surface at least partly overlapping a surface enclosed by a current loop of the second antenna array, characterized in that the second antenna array comprises a plurality of current loops.

2. An antenna configuration according to claim 1, characterized in that the second antenna array comprises more current loops than the first antenna array.

3. An antenna configuration according to claim 2, characterized in that the second antenna array comprises one more current loop than does the first antenna array.

4. An antenna configuration according to claim 1, 2, or 3, characterized in that each current loop of the second antenna array encloses a surface which coincides at least partly with at least one surface enclosed by a current loop of the first antenna array.

5. An antenna configuration according to any one of the preceding claims, characterized in that the first and second antenna arrays are at least substantially non-inductively coupled with each other.

6. An antenna configuration according to any one of the preceding claims, characterized in that the current loops in use have a current distribution such that far magnetic fields generated by the current loops compensate each other.

7. An antenna configuration according to any one of the preceding claims, characterized in that the first antenna array comprises at least a first and a second current loop, while in use through the first current loop a current flows with a rotative direction which is opposite to the rotative direction of a current flowing through the second current loop; and the second antenna array comprises at least a third, fourth and fifth current loop, the fourth current loop being located between the third and fifth current loops, and in use through the fourth current loop a current flows with a rotative direction which is opposite to the rotative direction of the currents flowing through the third and fifth current loops, respectively.

8. An antenna configuration according to claim 7, characterized in that the first and second current loops are located next to each other in the same direction as the third, fourth and fifth current loops.

9. An antenna configuration according to claim 8, characterized in that the surface enclosed by the fourth current loop coincides with at least a part of the surface enclosed by the first current loop and at least a part of the surface enclosed by the second current loop.

10. An antenna configuration according to claim 9, characterized in that the surface enclosed by the third current loop coincides at least substantially completely with a part of the surface enclosed by the first current loop, and the surface enclosed by the fifth current loop coincides at least substantially completely with a part of the surface enclosed by the second current loop.

11. An antenna configuration according to claim 10, characterized in that a dividing line located in said plane between the first and second current loops divides the surface enclosed by the fourth current loop in two at least substantially equally large parts.

12. An antenna configuration according to any one of the preceding claims 7-11, characterized in that the surface enclosed by the first and second current loops coincides at least substantially with the surface enclosed by the third, fourth and fifth current loops together.

13. An antenna configuration according to any one of the preceding claims 7-12, characterized in that the second antenna array is made up of a first O-shaped electrical conductor, which encloses the surface enclosed by the fourth current loop and whose free ends in use are connected with the transmitter and/or receiver, and a second electrically closed O-shaped electrical conductor, which encloses the sum of the surfaces enclosed by the third, fourth and fifth current loops, the two electrical conductors being inductively coupled with each other and in combination forming the third, fourth and fifth current loops.

14. An antenna configuration according to any one of the preceding claims 7-13, characterized in that the first antenna array is made up of a third O-shaped electrical conductor, which encloses the surface enclosed by the first current loop and whose free ends in use are connected with the transmitter and/or receiver, and a fourth electrically closed O-shaped conductor, which encloses the sum of the surfaces enclosed by the first and second current loops, the third and fourth electrical conductors being inductively coupled with each other and in combination forming the first and second current loops.

15. An antenna configuration according to claims 13 and 14, characterized in that the second and fourth electrically closed O-shaped conductors are one and the same conductor.

16. An antenna configuration according to claim 15, characterized in that the second and fourth electrical conductors consist at least partly of a hollow electrically conductive tube, the first and third electrical conductors being inductively coupled with the second and fourth electrical conductors, respectively, in that the first and third electrical conductors extend partly within the tube.

17. An electromagnetic detection system comprising a transmitter and receiver unit and an antenna configuration according to any one of the preceding claims coupled thereto, characterized in that the first and second antenna arrays are controlled, respectively, with first and second transmitted signals having a relative phase difference of 90°, so that an electromagnetic rotary field is generated at a plurality of positions in a detection zone.

18. An electromagnetic detection system comprising a transmitter and receiver unit and an antenna configuration according to any one of the preceding claims 1-16 coupled thereto, characterized in that one of the two antenna arrays is connected with the receiver unit of the system and the other antenna array is connected with the transmitter unit of the system.

## Patentansprüche

1. Antennenkonfiguration eines elektromagnetischen Erkennungssystems zum Erkennen und/oder Identifizieren von Erkennungsmarkierungen, mit einer ersten und einer zweiten Antennenanordnung, die im Betrieb mit einem Sender und/oder Empfänger des Erkennungssystems verbunden sind und wenigstens im wesentlichen in einer Ebene angeordnet sind, wobei die erste Antennenanordnung mehrere Stromschleifen aufweist, die zusammen eine Fläche umschließen, welche wenigstens teilweise eine von einer Stromschleife der zweiten Antennenanordnung umschlossene Fläche überlappt, dadurch gekennzeichnet, daß die zweite Antennenanordnung mehrere Stromschleifen aufweist.

2. Antennenkonfiguration nach Anspruch 1, dadurch gekennzeichnet, daß die zweite Antennenanordnung mehr Stromschleifen aufweist als die erste Antennenanordnung.

3. Antennenkonfiguration nach Anspruch 2, dadurch gekennzeichnet, daß die zweite Antennenanordnung eine Stromschleife mehr aufweist als die erste Antennenanordnung.

4. Antennenkonfiguration nach Anspruch 1, 2 oder 3, dadurch gekennzeichnet, daß jede Stromschleife der zweiten Antennenanordnung eine Fläche umschließt, die wenigstens teilweise mit wenigstens einer von einer Stromschleife der ersten Antennenanordnung umschlossenen Fläche zusammenfällt.

5. Antennenkonfiguration nach einem der vorhergehenden Ansprüche, dadurch gekennzeichnet, daß die erste und die zweite Antennenanordnung wenigstens im wesentlichen nicht-induktiv miteinander gekoppelt sind.

6. Antennenkonfiguration nach einem der vorhergehenden Ansprüche, dadurch gekennzeichnet, daß die Stromschleifen im Betrieb eine derartige Stromverteilung aufweisen, daß von den Stromschleifen erzeugte ferne Magnetfelder einander kompensieren.

7. Antennenkonfiguration nach einem der vorhergehenden Ansprüche, dadurch gekennzeichnet, daß die erste Antennenanordnung wenigstens eine erste und eine zweite Stromschleife aufweist, wobei während des Betriebs ein Strom durch die erste Stromschleife fließt, dessen Drehrichtung zu der Drehrichtung des durch die zweite Stromschleife fließenden Stroms entgegengesetzt ist; und daß die zweite Antennenanordnung wenigstens eine dritte, eine vierte und eine fünfte Stromschleife aufweist, wobei die vierte Stromschleife zwischen der dritten und der fünften Stromschleife angeordnet ist und im Betrieb ein Strom durch die vierte Stromschleife fließt, dessen Drehrichtung zu der Drehrichtung des jeweils durch die dritte und die fünfte Stromschleife fließenden Stroms entgegengesetzt ist.

8. Antennenkonfiguration nach Anspruch 7, dadurch gekennzeichnet, daß die erste und die zweite Stromschleife in der gleichen Richtung wie die dritte, vierte und fünfte Stromschleife nahe beieinander angeordnet sind.

9. Antennenkonfiguration nach Anspruch 8, dadurch gekennzeichnet, daß die von der vierten Stromschleife umschlossene Fläche mit wenigstens einem Teil der von der ersten Stromschleife umschlossenen Fläche und wenigstens einem Teil der von der zweiten Stromschleife umschlossenen Fläche zusammenfällt.

10. Antennenkonfiguration nach Anspruch 9, dadurch gekennzeichnet, daß die von der dritten Stromschleife umschlossene Fläche wenigstens im wesentlichen vollständig mit einem Teil der von der ersten Stromschleife umschlossenen Fläche zusammenfällt und die von der fünften Stromschleife umschlossene Fläche wenigstens im wesentlichen vollständig mit einem Teil der von der zweiten Stromschleife umschlossenen Fläche zusammenfällt.

11. Antennenkonfiguration nach Anspruch 10, dadurch gekennzeichnet, daß eine in der Ebene zwischen der ersten und der zweiten Stromschleife befindliche Trennlinie die von der vierten Stromschleife umschlossenen Fläche in zwei wenigstens im wesentlichen gleich große Teile unterteilt.

12. Antennenkonfiguration nach einem der vorhergehenden Ansprüche 7-11, dadurch gekennzeichnet, daß die von der ersten und der zweiten Stromschleife umschlossene Fläche wenigstens im wesentlichen mit der von der dritten, vierten und fünften Stromschleife zusammen umschlossenen Fläche zusammenfällt.

13. Antennenkonfiguration nach einem der vorhergehenden Ansprüche 7-12, dadurch gekennzeichnet, daß die zweite Antennenanordnung aus einem ersten O-förmigen elektrischen Leiter, der die von der vierten Antennenschleife umschlossene Fläche umschließt und dessen freie Enden mit dem Sender und/oder Empfänger verbunden sind, und aus einem zweiten elektrisch geschlossenen O-förmigen elektrischen Leiter besteht, der die Summe der von der dritten, vierten und fünften Stromschleife umschlossenen Flächen umschließt, wobei die beiden elektrischen Leiter induktiv miteinander verbunden sind und in Kombination die dritte, vierte und fünfte Stromschleife bilden.

14. Antennenkonfiguration nach einem der vorhergehenden Ansprüche 7-13, dadurch gekennzeichnet, daß die erste Antennenanordnung aus einem dritten O-förmigen elektrischen Leiter, der die von der ersten Antennenschleife umschlossene Fläche umschließt und dessen freie Enden mit dem Sender und/oder Empfänger verbunden sind, und aus einem vierten elektrisch geschlossenen O-förmigen elektrischen Leiter besteht, der die Summe der von der ersten und zweiten Stromschleife umschlossenen Flächen umschließt, wobei die beiden elektrischen Leiter induktiv miteinander gekoppelt sind und in Kombination die erste und zweite Stromschleife bilden.

15. Antennenkonfiguration nach einem der Ansprüche 13 und 14, dadurch gekennzeichnet, daß der zweite und der vierte elektrisch geschlossene O-förmige Leiter derselbe Leiter ist.

16. Antennenkonfiguration nach Anspruch 15, dadurch gekennzeichnet, daß der zweite und der vierte elektrische Leiter wenigstens teilweise aus einem elektrisch leitfähigen Hohlrohr bestehen, wobei der erste und der dritte elektrische Leiter mit dem zweiten bzw. dem vierten elektrischen Leiter induktiv derart gekoppelt sind, daß der erste und der dritte elektrische Leiter sich teilweise in dem Rohr erstrecken.

17. Elektromagnetisches Erkennungssystem mit einer Sender- und Empfängereinheit und einer damit gekoppelten Antennenkonfiguration nach einem der vorhergehenden Ansprüche, dadurch gekennzeichnet, daß die erste und die zweite Antennenanordnung jeweils durch ein erstes und zweites Sendesignal mit einer relativen Phasendifferenz von 90° gesteuert sind, so daß ein elektromagnetisches Drehfeld an mehreren Stellen in einer Erkennungszone erzeugt wird.

18. Elektromagnetisches Erkennungssystem mit einer Sender- und Empfängereinheit und einer damit gekoppelten Antennenkonfiguration nach einem der vorhergehenden Ansprüche 1-16, dadurch gekennzeichnet, daß eine der beiden Antenneneinrichtungen mit der Empfängereinheit des Systems und die andere Antennenanordnung mit der Sendereinheit des Systems verbunden ist.

## Revendications

1. Configuration d'antenne d'un système de détection électromagnétique destiné à détecter et/ou identifier des étiquettes de détection, comprenant un premier et un second systèmes d'antenne, qui en fonctionnement, sont reliés à un émetteur et/ou un récepteur du système de détection et sont situés au moins essentiellement et en majeure partie dans un plan, le premier système d'antenne comprenant une pluralité de boucles de courant entourant ensemble une surface qui chevauche au moins partiellement une surface entourée par une boucle de courant du second système d'antenne,
caractérisée en ce que le second système d'antenne comprend une pluralité de boucles de courant.

2. Configuration d'antenne selon la revendication 1,
caractérisée en ce que le second système d'antenne comprend davantage de boucles de courant que le premier système d'antenne.

3. Configuration d'antenne selon la revendication 2,
caractérisée en ce que le second système d'antenne comprend une boucle de courant de plus que n'en comprend le premier système d'antenne.

4. Configuration d'antenne selon la revendication 1, 2 ou 3, caractérisée en ce que chaque boucle de courant du second système d'antenne entoure une surface qui coïncide au moins partiellement avec au moins une surface entourée par une boucle de courant du premier système d'antenne.

5. Configuration d'antenne selon l'une quelconque des revendications précédentes, caractérisée en ce que les premier et second réseaux d'antenne sont au moins en majeure partie couplés de façon non inductive l'un avec l'autre.

6. Configuration d'antenne selon l'une quelconque des revendications précédentes, caractérisée en ce que les boucles de courant présentent, en utilisation, une distribution de courant telle que des champs magnétiques lointains générés par les boucles de courant se compensent l'un l'autre.

7. Configuration d'antenne selon l'une quelconque des revendications précédentes, caractérisée en ce que le premier système d'antenne comprend au moins une première et une seconde boucles de courant, alors qu'en utilisation, circule dans la première boucle de courant un courant présentant un sens de rotation qui est opposé au sens de rotation d'un courant circulant dans la seconde boucle de courant, et le second système d'antenne comprend au moins une troisième, une quatrième et une cinquième boucles de courant, la quatrième boucle de courant étant située entre la troisième et la cinquième boucles de courant, et en utilisation, circule un courant dans la quatrième boucle de courant qui présente un sens de rotation qui est opposé au sens de rotation des courants circulant dans les troisième et cinquième boucles de courant, respectivement.

8. Configuration d'antenne selon la revendication 7, caractérisée en ce que les première et seconde boucles de courant sont situées à proximité l'une de l'autre dans la même direction que les troisième, quatrième et cinquième boucles de courant.

9. Configuration d'antenne selon la revendication 8, caractérisée en ce que la surface entourée par la quatrième boucle de courant coïncide avec au moins une partie de la surface entourée par la première boucle de courant et au moins une partie de la surface entourée par la seconde boucle de courant.

10. Configuration d'antenne selon la revendication 9, caractérisée en ce que la surface entourée par la troisième boucle de courant coïncide au moins en majeure partie complètement avec une partie de la surface entourée par la première boucle de courant, et la surface entourée par la cinquième boucle de courant coïncide au moins en majeure partie complètement avec une partie de la surface entourée par la seconde boucle de courant.

11. Configuration d'antenne selon la revendication 10, caractérisée en ce qu'une ligne de division située dans ledit plan entre les première et seconde boucles de courant divise la surface entourée par la quatrième boucle de courant en deux parties au moins substantiellement également importantes.

12. Configuration d'antenne selon l'une quelconque des revendications précédentes 7 à 11, caractérisée en ce que la surface entourée par les première et seconde boucles de courant coïncide au moins en majeure partie avec la surface entourée par les troisième, quatrième et cinquième boucles de courant prises ensemble.

13. Configuration d'antenne selon l'une quelconque des revendications précédentes 7 à 12, caractérisée en ce que le second système d'antenne est constitué d'un premier conducteur électrique en forme de O qui entoure la surface entourée par la quatrième boucle de courant et dont les extrémités libres sont reliées en utilisation à l'émetteur et/ou récepteur, et un second conducteur électrique en forme de O électriquement fermé, qui entoure la somme des surfaces entourées par les troisième, quatrième et cinquième boucles de courant, les deux conducteurs électriques étant couplés de façon inductive l'un avec l'autre et formant en combinaison les troisième, quatrième et cinquième boucles de courant.

14. Configuration d'antenne selon l'une quelconque des revendications précédentes 7 à 13, caractérisée en ce que le premier système d'antenne est constitué d'un troisième conducteur électrique en forme de O, qui entoure la surface entourée par la première boucle de courant et dont les extrémités libres sont reliées en utilisation à l'émetteur et/ou récepteur, et un quatrième conducteur en forme de O électriquement fermé, qui entoure la somme des surfaces entourées par les première et seconde boucles de courant, les troisième et quatrième conducteurs électriques étant couplés de façon inductive l'un avec l'autre et formant en combinaison les première et seconde boucles de courant.

15. Configuration d'antenne selon les revendications 13 et 14, caractérisée en ce que les second et quatrième conducteurs en forme de O électriquement fermés constituent un seul et même conducteur.

16. Configuration d'antenne selon la revendication 15, caractérisée en ce que les second et quatrième conducteurs électriques sont constitués au moins partiellement d'un tube creux électriquement conducteur, les premier et troisième conducteurs électriques étant couplés de façon inductive aux second et quatrième conducteurs électriques, respectivement, en ce que les premier et troisième conducteurs électriques s'étendent partiellement à l'intérieur du tube.

17. Système de détection electromagnétique comprenant un bloc d'émetteur et de récepteur et une configuration d'antenne selon l'une quelconque des revendications précédentes reliée à celui-ci, caractérisé en ce que les premier et second réseaux d'antenne sont commandés, respectivement, par des premier et second signaux transmis présentant un déphasaqe relatif de 90°, de sorte qu'un champ électromagnétique rotatif est généré au niveau d'une pluralité de positions dans une zone de détection.

18. Système de détection électromagnétique comprenant un bloc d'émetteur et de récepteur et une configuration d'antenne selon l'une quelconque des revendications précédentes 1 à 16 reliée à celui-ci, caractérisé en ce que l'un des deux réseaux d'antenne est relié au bloc de récepteur du système et l'autre systéme d'antenne est relié au bloc d'émetteur du système.
